# EUROPÄISCHE PATENTSCHRIFT

(11) **EP 1 744 945 B1**
(45) Veröffentlichungstag und Bekanntmachung des Hinweises auf die Patenterteilung: **25.06.2008**
(21) Anmeldenummer: 05742372.5
(22) Anmeldetag: 15.04.2005
(51) Int. Cl.: B62D 25/20, B62D 21/06, B62D 25/08

(54) **KRAFTFAHRZEUG**
MOTOR VEHICLE
VEHICULE AUTOMOBILE

(30) Priorität: 20.04.2004 DE 102004018977
(43) Veröffentlichungstag der Anmeldung: 24.01.2007
(73) Patentinhaber: Wilhelm Karmann GmbH, 49084 Osnabrück (DE)
(72) Erfinder: WESTING, Franz, 49205 Hasbergen (DE); BENTE, Andreas, 48477 Hörstel (DE); PARTMANN, Vinzenz, 49835 Wietmarschen (DE)
(86) Internationale Anmeldenummer: PCT/DE2005/000691
(87) Internationale Veröffentlichungsnummer: WO 2005/102824

(56) Entgegenhaltungen:
- EP-A- 1 415 896
- DE-A1- 3 942 794

## Beschreibung

Die Erfindung betrifft ein Kraftfahrzeug, insbesondere ein Cabriolet-Fahrzeug, mit seinem Unterbodenbereich zugeordneten Streben nach dem Oberbegriff des Anspruchs 1.

Bei Kraftfahrzeugen stellt sich allgemein das Problem, daß im Fahrbetrieb auftretende äußere Anregungen von Schwingungen, etwa beim Überfahren von Fahrbahnunebenheiten, zum Beispiel Schlaglöchern oder aufwärts ragenden Schwellen, unerwünschte Schwingungen und Verwindungen der Karosserie auslösen können. Dadurch können Fahrsicherheit und -komfort beeinträchtigt und die Fahrzeugstruktur belastet werden. Dieses Problem tritt in besonderem Maß bei Cabriolet-Fahrzeugen mit einer selbsttragenden Karosserie auf, die aufgrund des nicht starren Daches, das vor allem im geöffneten Zustand die Karosserie nicht aussteifen kann, einen Stabilitätsnachteil gegenüber geschlossenen Fahrzeugaufbauten aufweisen. Insbesondere kann es zu merklichen Torsionen des Fahrzeugs um eine in Fahrtrichtung gelegene Längsachse kommen. Grundsätzlich stellt sich das Problem mehr oder weniger ausgeprägt bei allen Fahrzeuggattungen.

Es ist bekannt, der Karosserie im Unterbodenbereich gesonderte, aussteifende Streben zuzuordnen, von denen beispielsweise ein Strebenpaar von in Fahrzeugquerrichtung äußeren Randbereichen vor hinteren Radhäusern bis in einen weiter innen im Nahbereich einer vertikalen Fahrzeuglängsmittelebene liegenden Bereich hinter den hinteren Radhäusern reichen und dort an einer mit Rippen, Sicken oder dergleichen Aussteifungen versehenen Reserveradwanne festgelegt sein kann.

Die DE 3 942 794 A1 beschreibt ein Kraftfahrzeug, mit, im Unterbodenbereich, zwei aussteifende Streben, und mit einem Verbindungsträger, und mit zwei weitere Streben.

Bei Fahrzeugen mit einer tief liegenden Hinterachse oder anderen geometrischen Besonderheiten tritt die Schwierigkeit auf, daß die üblicherweise horizontal unter dem Boden liegenden Streben auf ein Hindernis stoßen würden und die bisherige Möglichkeit der Strebenfestlegung am Unterboden erschwert oder gar unmöglich ist.

Die DE 102 14 372 C1 zeigt ein Fahrzeug, bei dem zwei Streben, die nach hinten hin auf eine Fahrzeugquermitte zulaufen, mit ihren rückwärtigen Enden über einen Anbindungsbereich an der Karosserie gehalten sind. Der Anbindungsbereich ist bezüglich der Fahrzeuglängsrichtung rückwärtig über drei Halterungen an der Karosserie im Nahbereich der Fahrzeugquermitte festgelegt. Die Halterungen wirken dadurch einer Biegebeanspruchung um eine quer zum Fahrzeug liegende Horizontalachse entgegen. Zusätzlich ist ein hinteres Strebenpaar vorgesehen, das ebenfalls einenends an dem Anbindungsbereich gehalten ist und einer Torsionsbeanspruchung des Fahrzeugs um eine Fahrzeuglängsachse entgegenwirken soll. Bei Torsion ist das System jedoch überbestimmt. Einem Teil der über eine der vorderen Streben eingeleiteten Dehnung oder Stauchung wird über Biegung des Anbindungsbereichs, einem weiteren Teil über die in Fahrzeugquermitte liegenden Halterungen entgegengewirkt, die aufgrund ihrer Nähe zur Fahrzeugquermitte keine gute Abstützung gegen Torsionen bie-ten, und nur ein weiterer Teil der eingeleiteten Kraft wird über Streben aufgefangen. Die Torsionsminderung ist somit verschlechtert. Bei schwierigen Karosserieverhältnissen wie etwa einer tief liegenden Hinterachse ist eine solche Konstruktion zudem nicht montierbar.

Der Erfindung liegt das Problem zugrunde, bei einem Kraftfahrzeug die Möglichkeiten des Strebenverlaufs und ihrer Anbindung an der Karosserie zu erweitern.

Die Erfindung löst dieses Problem durch ein Kraftfahrzeug mit den Merkmalen des Anspruchs 1. Vorteilhafte Ausgestaltungen des Gegenstandes der Erfindung ergeben sich aus den weiteren Ansprüchen 2 bis 10.

Mit der frei hängenden Anordnung des Verbindungsträgers unter dem Unterboden ergibt sich eine optimierte Gegenwirkung gegen auftretende Torsionsverwindungen des Fahrzeugs um eine Längsachse. Der Verbindungsträger benötigt außerhalb von daran gehaltenen und jeweils zu Fahrzeugquerrändern laufenden Streben keine weitere Anbindung. Aufgrund des Abstandes des Verbindungsträgers zum Unterboden ist dieser auch bei schwierigen Karosserieverhältnissen montierbar und kann insbesondere auch in Fahrtrichtung vor einer Hinterachse angeordnet sein. Für die Torsionsminimierung spielt es dabei keine Rolle, ob die abgehenden Streben in einem zur Horizontalebene großen oder kleinen Winkel von dem Verbindungsträger abgehen. Zudem ist durch den dichten Abstand der Strebenenden bezüglich der Fahrzeugquerrichtung an dem Verbindungsträger sichergestellt, daß dieser praktisch nicht auf Biegung beansprucht wird. Da der Verbindungsträger um zumindest eine quer zum Fahrzeug erstreckte Achse zwischen den Halterungen für zwei Streben und den Halterungen für zwei weitere Streben abgewinkelt ist, müssen vordere und hintere Streben nicht in einer gemeinsamen Ebene liegen, sondern die hinteren Streben können von dem Verbindungsträger beispielsweise steil aufwärts verlaufen, etwa um noch an einem in Fahrtrichtung vor der Hinterachse gelegenen Querträger festgelegt sein zu können.

Das Vermeiden einer Biegungsbeanspruchung ergibt sich insbesondere, wenn der Abstand der Strebenhalterungen am Verbindungsträger in Fahrzeugquerrichtung weniger als 120 Millimeter beträgt.

Dabei wird eine besonders effektive Torsionsauslöschung erreicht, wenn das hintere der beiden Strebenpaare an einem Querträger der Karosserie über diesen zumindest bereichsweise vorder- und rückseitig umgreifende Anschlußflansche festgelegt ist.

Auch ist es möglich, daß die Streben schwingungsselektiv ausgebildet sind und diesen eine Aufnahmeeinheit zur Erfassung von im Fahrbetrieb auftretenden Längsbeanspruchungen und zumindest ein Stellglied zum Bewirken einer der Längsbeanspruchung entgegenwirkenden Kraft zugeordnet ist, so daß eine aktive Stabilisierung des Fahrzeugs gegen äußere Anregung möglich ist.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische perspektivische Ansicht eines Unterbodenbereichs eines erfindungsgemäß ausgebildeten Kraft-fahrzeugs,

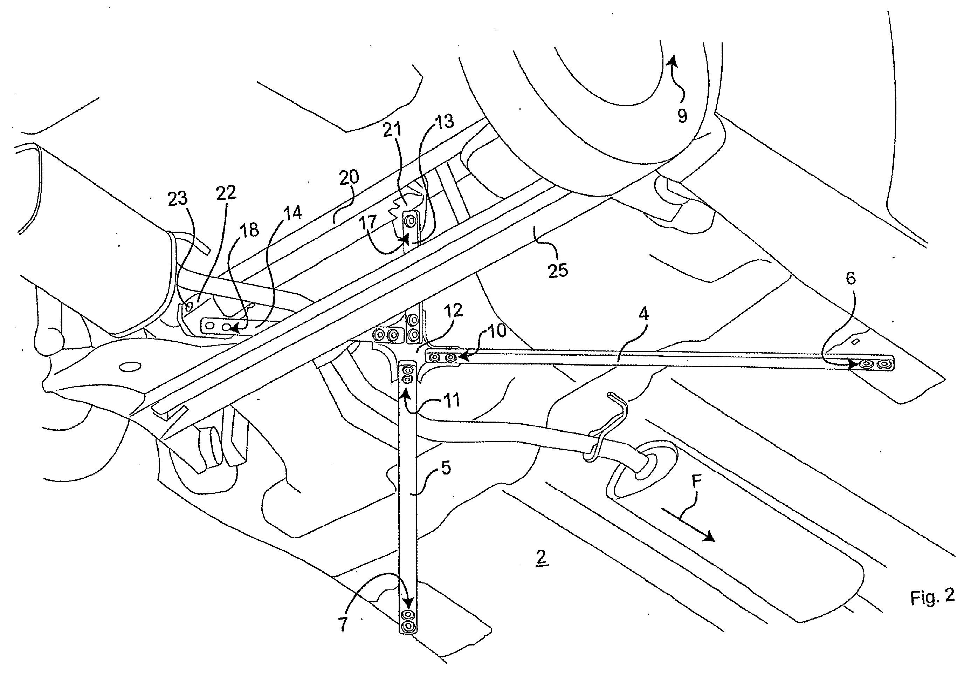

- Fig. 2: eine vergrößerte Ansicht des Details II in Fig. 1,
- Fig. 3: eine ähnliche Ansicht wie Fig. 2, jedoch ohne mit anstelle von vorderen Streben eingezeichneten zugehörigen Kraftvektoren,

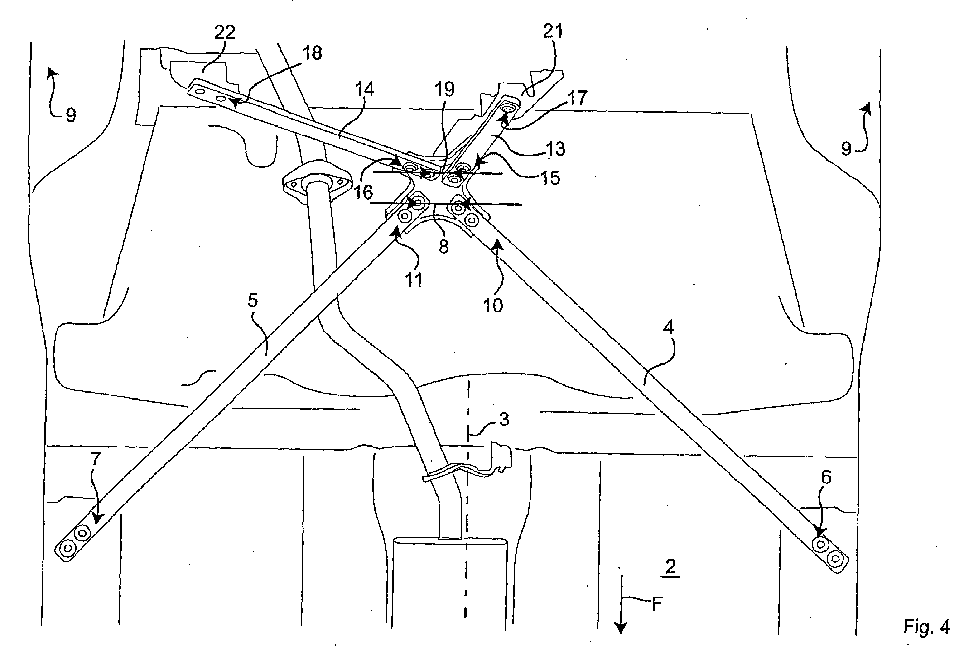

- Fig. 4: die Strebenanordnung nach Fig. 2 in Detailansicht von unten,

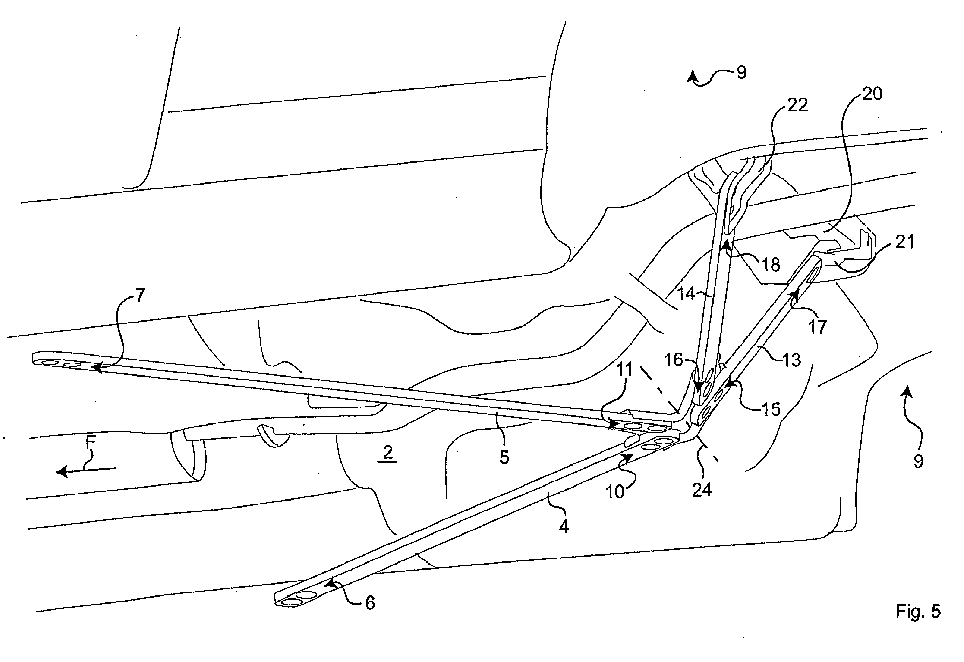

- Fig. 5: den Bereich nach Fig. 2 in perspektivischer Ansicht von schräg seitlich unten,

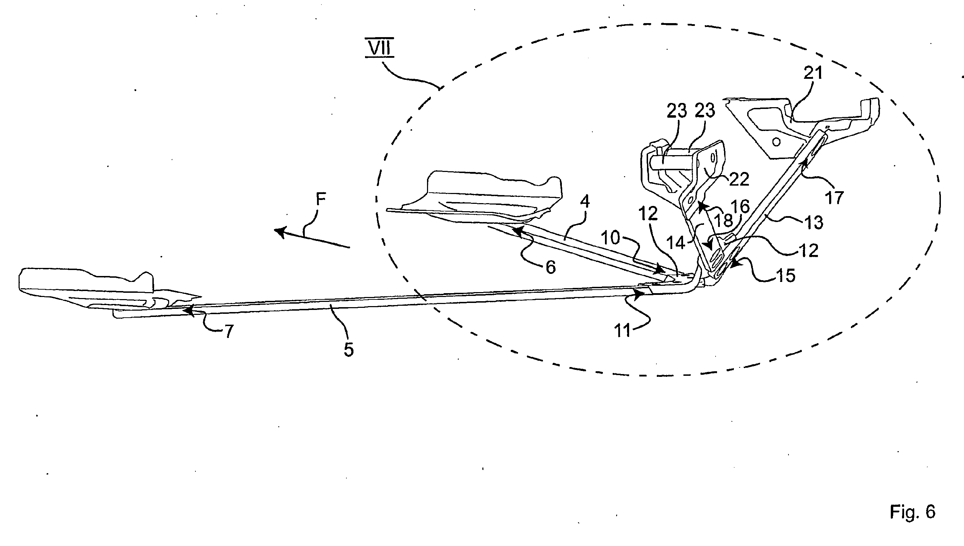

- Fig. 6: eine ähnliche Ansicht wie Fig. 5, jedoch ohne eingezeichnete Karosserieteile,
- Fig. 7: eine Detailansicht etwa entsprechend dem Ausschnitt VII in Fig. 6.

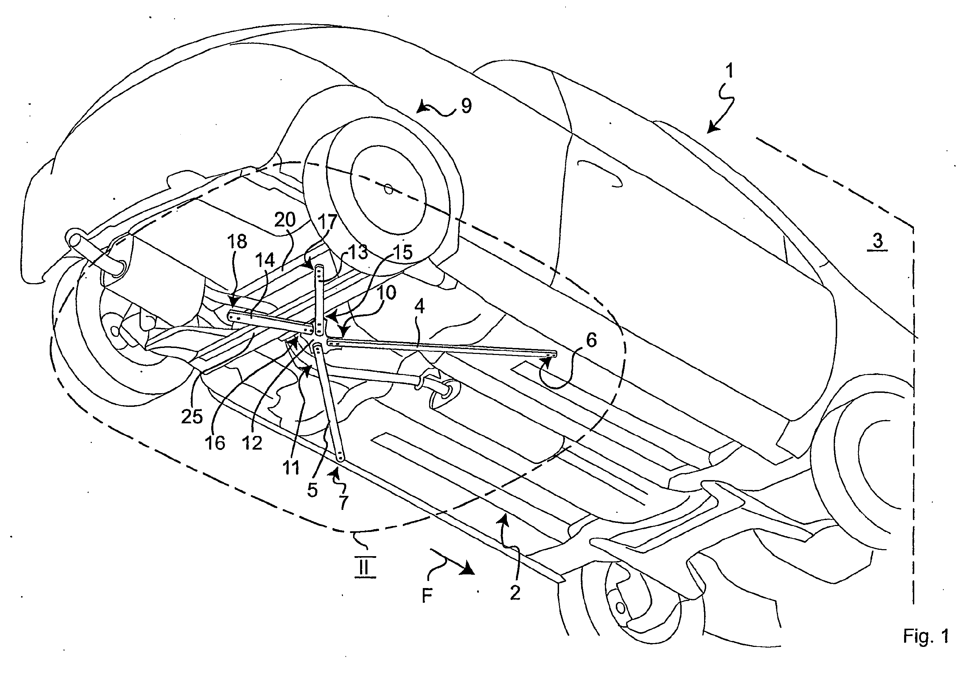

In dem gezeichneten Ausführungsbeispiel nach Figur 1 ist dem Unterboden 2 eines Fahrzeugs 1 - hier eines Cabriolet-Fahrzeugs, was nicht zwingend ist - zumindest in der hinteren Fahrzeughälfte ein erstes Paar von zumindest nahezu symmetrisch zu einer vertikalen Längsmittelebene 3 liegenden Aussteifungsstreben 4, 5 zugeordnet. Zusätzlich können im vorderen Fahrzeugbereich weitere Streben liegen. Die in der Zeichnung gezeigte Anzahl und symmetrische Anordnung von Streben 4, 5 ist nur beispielhaft zu verstehen, ebenso ihr verlauf.

Die Streben 4, 5 sind hier über Konsolen jeweils mit ihren in Fahrtrichtung F vorderen Enden 6, 7 am Unterboden 2 des Fahrzeugs 1 in dessen äußerem Querrandbereich, beispielsweise an Seitenschwellern, befestigt. Im vorliegenden Ausführungsbeispiel sind sie mit dem Unterboden 2 lösbar verschraubt, wozu oberhalb des Unterbodens 2 separate und jeweils mit einem Innengewinde versehene Widerlager - nicht gezeichnet - vorgesehen sind. Auch ein Vernieten oder Verschweißen kommt in Betracht.

Die Streben 4, 5 erstrecken sich in ihrem Verlauf von ihren vorderen Enden 6, 7 vor den hinteren Radhäusern 9 bis zu hinteren Enden 10, 11, die bezüglich der Fahrtrichtung F hinter oder ebenfalls vor den Radhäusern 9 liegen können, mit einer Komponente auf die vertikale Längsmittelebene 3 zu. Die Streben 4, 5 können beispielsweise als Flacheisen oder Profile, etwa Rohr- oder Kastenprofile, aus Metall oder etwa auch einem faserverstärkten Kunststoff ausgebildet sein. Die Enden 6, 7, 10, 11 können auch bei Profilstreben 4, 5 flach zusammengepreßt sein, um den Durchgriff von Befestigungsmitteln zu vereinfachen. Die Form der Streben 4, 5 kann von der hier gezeigten Geradlinigkeit erheblich abweichen. Auch etwa abgewinkelte und/oder bereichsweise flächige Bauteile kommen als Streben in Betracht.

Die hinteren Enden 10, 11 der Streben 4, 5 sind an einem gemeinsamen Verbindungsträger 12 befestigt, der unterhalb des Unterbodens 2 und mit vertikalem Abstand zu diesem gelegen ist.

Die hinteren Enden 10, 11 der beiden Streben 4, 5 liegen dabei quer zur Fahrtrichtung F einander dicht benachbart; ihr Querabstand 8 beträgt maximal 120 Millimeter, in der Regel deutlich weniger als 100 Millimeter, um eine Biegebeanspruchung des Verbindungsträgers 12 zu vermeiden.

Zudem sind an dem verbindungsträger 12 zwei weitere Streben 13, 14 mit ihren Enden 15, 16 gehalten und erstrecken sich zu ihren abgewandten Enden 17, 18 von der vertikalen Längsmittelebene 3 auswärts weisend.

Der Verbindungsträger 12 ist somit ausschließlich über die beiden Strebenpaare 4, 5 und 13, 14 gegenüber dem Unterboden 2 gehalten und ansonsten frei hängend. Weitere Karosserieanbindungen sind vollständig entbehrlich. Die Lage des Verbindungsträgers 12 kann daher je nach Geometrie eines Unterbodens 2 erheblich variieren, insbesondere kann er je nach Platzverhältnissen mal vor und mal hinter der Hinterachse angeordnet werden. Die Streben 4, 5, 13, 14 sind an dem Verbindungsträger 12 hier lösbar über Schraubverbindungen gehalten, so daß eine Demontage, etwa für ein Auswechseln der Auspuffanlage, einfach möglich ist. Auch kann der Verbindungsträger 12 - hier nicht gezeichnet - einstückig mit einer der Streben 4, 5, 13, 14 oder mit einem Strebenpaar 4, 5 bzw. 13, 14 ausgebildet sein.

Auch der Querabstand 19 der Enden 15, 16 der weiteren Streben 13, 14 am Verbindungsträger 12 ist möglichst gering und beträgt deutlich weniger als 120 Millimeter, im Ausführungsbeispiel weniger als 40 Millimeter.

Mit den abgewandten Enden 17, 18 sind die weiteren Streben 13, 14 am Unterboden 2 im Bereich tragender und quer zur Fahrtrichtung steifer Abschnitte festgelegt, etwa an der Reserveradmulde, seitlichen Längsträgern oder - wie hier - einem Querträger 20.

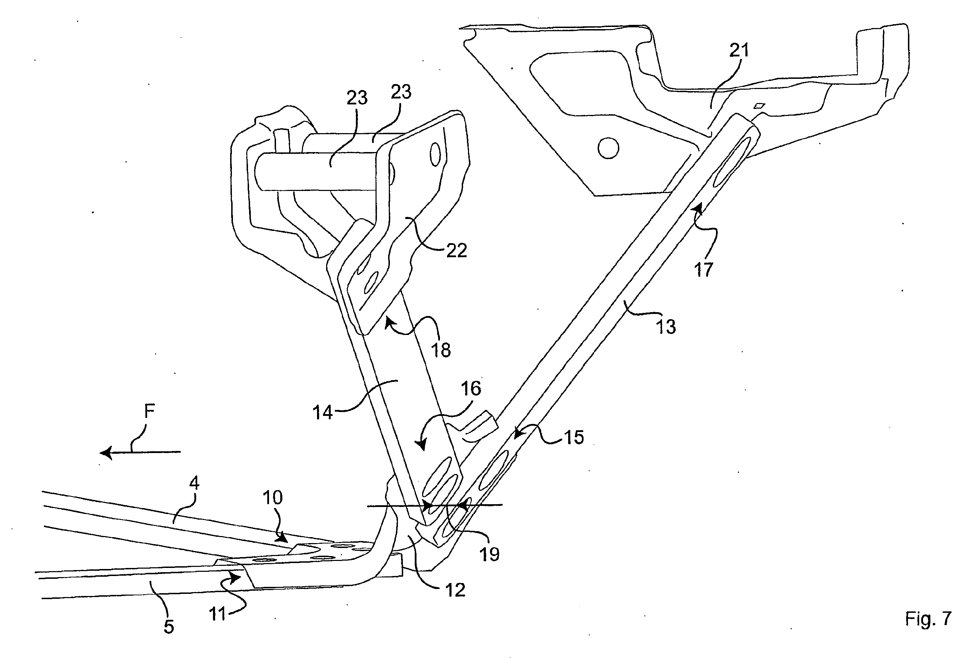

Dort sind die Streben 13, 14 über den Querträger 20 zumindest teilweise vorder- und rückseitig übergreifende Anschlußflansche 21, 22 festgelegt, die, wie insbesondere in Fig. 7 sichtbar ist, ebenso wie die Strebenanordung nicht symmetrisch sein müssen. Der Flansch 22 umfaßt beispielsweise zwei in Verbindungsstellung horizontal und parallel zur Längsebene 3 liegende Bolzen 23, die den Querträger 20 durchgreifen. Somit sind die Streben 13, 14 besonders stabil gegen Dehnungs- oder Stauchungs-Krafteinwirkung in ihrer Erstreckungsrichtung gehalten. Die Enden 17, 18 der Streben 13, 14 münden über die Flansche 21, 22 auch nicht parallel in den Unterboden, sondern stehen nahezu senkrecht dazu, wie zum Beispiel in Fig. 7 zu erkennen ist. Damit wird bei Torsion eine Biegung dieser Streben 13, 14 um ihre Hochachse erforderlich, so daß die Streben 13, 14 dieser Krafteinwirkung besonders viel Widerstand entgegensetzen können.

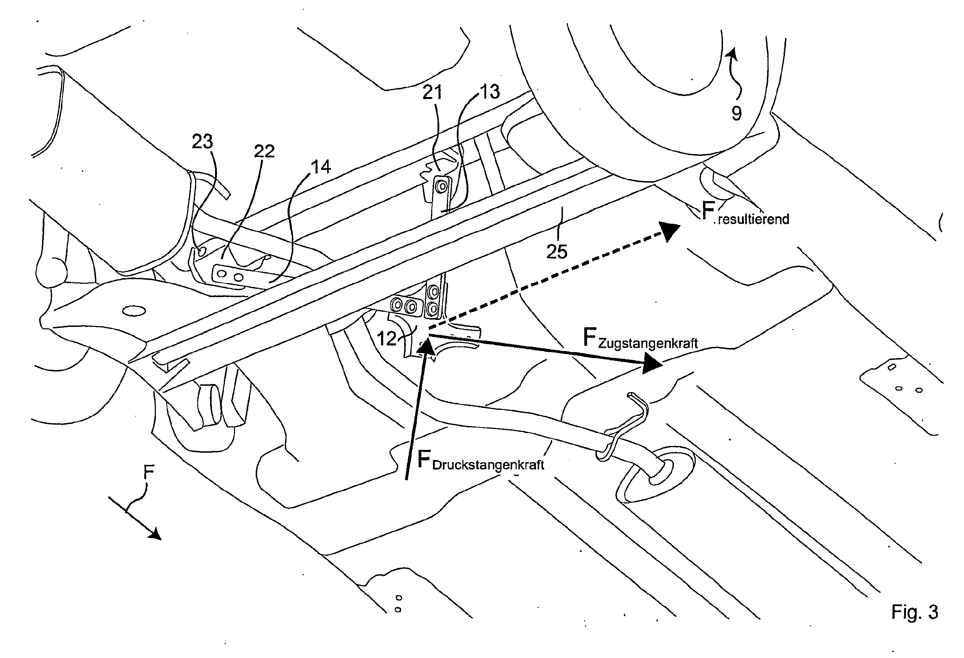

Der Verbindungsträger 12 kann von einem um eine horizontal und quer zur Fahrtrichtung F liegende Achse 24 abgewinkelten Flachkörper gebildet sein. In Frage kommt hier zum Beispiel ein Stahlkörper aus ST 52 in einer Stärke von 5 Millimetern. Der Träger 12 kann zum Beispiel Abmessungen von 10 * 30 Millimetern haben. Die Abwinklung liegt zwischen den Anbindungspunkten der vorderen 4, 5 und der hinteren Streben 13, 14. Da im Ausführungsbeispiel eine tief liegende Hinterachse 25 vorgesehen ist, erfolgt die Abwinklung in einem großen Winkel von beispielsweise 60° bis 80°, so daß auch die hinteren Streben 13, 14 noch in Fahrtrichtung dieser vorgeordnet an dem Unterboden 2 - hier dem Querträger 20 - festgelegt sein können. Auch ein Verzicht auf eine Abwinklung oder eine Abwinklung von mehr als 90° ist hier möglich, sofern die Gestaltung des Unterbodens dies erfordert. Dies resultiert daraus, daß die hier gezeigte Strebenanordnung allein gegen Torsion wirken soll und eine Aussteifung des Fahrzeugs gegen Biegung nicht damit verbunden sein muß. Wie unten anhand der Figur 3 erläutert, treten bei Torsion nur resultierende Kräfte in Fahrzeugquerrichtung und nicht in Fahrzeuglängsrichtung auf. Auch ist es nicht zwingend, daß der Verbindungsträger 12 in der Längsmittelebene 3 liegt, sondern eine um einige zehn Millimeter außermittige Lage ist ohne weiteres möglich. Der Verbindungsträger 12 kann je nach Fahrzeug unterschiedlich abgewinkelt werden und ist daher für verschiedene Fahrzeuge einsetzbar.

In Projektion auf eine entsprechend der Abwinklung um die Achse 24 abgewinkelte Ebene ergeben die Streben 4, 5, 13, 14 nahezu eine für die Torsionssteifigkeit um eine Fahrzeuglängsachse sehr günstige X-Form, wobei das verbindungsblech 12 den Knoten des X bildet.

Bei Anregung einer Torsion des Fahrzeugs 1 um eine Längsachse, etwa dadurch, daß der in Fahrtrichtung F rechte vordere Fahrzeugbereich einen aufwärts gerichteten Impuls erfährt, (Fig. 3), wird die Strebe 4 auf Zug beansprucht, wohingegen die gegenüberliegende Strebe 5 auf Druck beansprucht wird. Die resultierende Kraft hieraus wirkt vollständig in Fahrzeugquerrichtung, so daß es keiner Abstützung in Fahrzeuglängsrichtung bedarf. Der resultierenden Kraft wird dann durch die beiden hinteren Streben 13, 14 entgegengewirkt, die daher auch an in Fahrzeugquerrichtung steifen Bereichen des Unterbodens 2, hier dem Querträger 20, festgelegt sind. Auch ist die Festlegung über die Flansche 21, 22 so ausgebildet, daß große Kräfte in Fahrzeugquerrichtung abgefangen werden können. Insbesondere sind die Strebenenden 17, 18 möglichst weit außen am Unterboden 2 festgelegt.

Die Streben 4, 5 der Karosserie können nicht nur als herkömmliche Aussteifungsbauteile, sondern auch - nicht gezeichnet - als adaptive Schwingungsdämpfer dienen, d. h., daß sie neben der passiven Aussteifungsfunktion auch eine aktive Beeinflussung des Schwingungsverhaltens der Karosserie ermöglichen.

Hierzu können die Streben 4, 5 jeweils mehrteilig ausgebildet sein und etwa über Piezokristalle sowohl eine Längenänderung der Streben 4, 5 detektieren, etwa durch Überfahren eines Schlaglochs oder einer Schwelle, als auch dieser mit kurzer Ansprechzeit über Aktuatoren aktiv entgegenwirken.

Die Druck- oder Zugkraft auf die Streben 4, 5 wird von der Aufnahmeeinheit, die beispielsweise Druck-Spannungs-Wandler enthält, erfaßt und in ein elektrisches Signal für den Aktuator umgesetzt, der der äußeren Kraft entgegenwirkt. Durch die Aktuatoren werden dann die beiden Streben 4, 5 gegenphasig zueinander verlängert oder verkürzt. Beide Streben 4, 5 steifen dadurch gleichzeitig die Karosserie aus und bewirken eine aktive Dämpfung. Damit wird die Wirkung der äußeren Anregung nahezu ausgelöscht. Aktuator und Aufnahmeeinheit haben sehr kurze Ansprechzeiten, so daß Anregungsfrequenzen von einigen Hz bis zu einigen 10 Hz effektiv entgegengewirkt werden kann.

## Patentansprüche

1. Kraftfahrzeug (1), insbesondere Cabriolet-Fahrzeug, mit einer Fahrzeugkarosserie, deren Unterbodenbereich (2) zumindest zwei aussteifende und jeweils von einer Karosserieanbindung (6,7) mit einer Komponente in Richtung auf eine vertikale Längsmittelebene (3) zu verlaufende Streben (4,5) zugeordnet sind, wobei
frei unter dem Unterboden (2) und mit Abstand zu diesem ein Verbindungsträger (12) vorgesehen ist, an dem diese Streben (4,5) in dichtem Abstand (8) bezüglich der Fahrzeugquerrichtung sowie zwei weitere Streben (13,14), die sich von dort jeweils mit einer Komponente in Richtung von der vertikalen Längsmittelebene (3) weg erstrecken, gehalten sind, **dadurch gekennzeichnet, daß** der Verbindungsträger (12) um zumindest eine quer zum Fahrzeug (1) erstreckte Achse (24) zwischen den Halterungen für zwei Streben (4,5) und den Halterungen für zwei weitere Streben (13,14) abgewinkelt ist.

2. Kraftfahrzeug (1) nach Anspruch 1,
**dadurch gekennzeichnet,**
**daß** der Abstand (8) der Halterungen der Streben (3;4) am Verbindungsträger (12) in Fahrzeugquerrichtung weniger als 120 Millimeter beträgt.

3. Kraftfahrzeug (1) nach einem der Ansprüche 1 oder 2,
**dadurch gekennzeichnet,**
**daß** die weiteren am Verbindungsträger (12) gehaltenen Streben (13,14) anderenends jeweils an einem Fahrzeugquerträger (20), an der Reserveradmulde oder an Fahrzeuglängsträgern festgelegt sind.

4. Kraftfahrzeug (1) nach einem der Ansprüche 1 bis 3,
**dadurch gekennzeichnet,**
**daß** der Verbindungsträger (12) einer Hinterachse (25) in Fahrtrichtung (F) vorgeordnet ist.

5. Kraftfahrzeug (1) nach einem der Ansprüche 1 bis 4,
**dadurch gekennzeichnet,**
**daß** sämtliche an dem Verbindungsträger (12) gehaltenen Streben (4,5;13,14) in Fahrtrichtung (F) vor der Hinterachse (25) zu ihrer Karosserieanbindung (6,7;17,18) geführt sind.

6. Kraftfahrzeug (1) nach einem der Ansprüche 1 bis 5,
**dadurch gekennzeichnet,**
**daß** an dem verbindungsträger hintereinander zwei Strebenpaare (4,5;13,14) angeordnet sind, die zumindest in Projektion auf eine entsprechend der Abwinklung (24) des Verbindungsträgers (12) abgewinkelte Ebene eine nahezu x-förmige Gesamtgestalt haben.

7. Kraftfahrzeug (1) nach Anspruch 6,
**dadurch gekennzeichnet,**
**daß** die Streben (4,5;13,14) jedes Strebenpaars jeweils in Fahrzeugquerrichtung dicht beieinander (8;19) an dem Verbindungsträger (12) gehalten sind.

8. Kraftfahrzeug (1) nach einem der Ansprüche 6 oder 7,
**dadurch gekennzeichnet,**
**daß** das hintere (13,14) der beiden Strebenpaare (4,5;13,14) an einem Querträger (20) der Karosserie über diesen zumindest bereichsweise vorder- und rückseitig umgreifende Anschlußflansche (21,22) festgelegt ist.

9. Kraftfahrzeug (1) nach einem der Ansprüche 1 bis 8,
**dadurch gekennzeichnet,**
**daß** der Verbindungsträger (12) ausschließlich über Aussteifungsstreben (4,5;13,14) an dem Unterboden (2) gehalten ist und sich die in eine Karosserieanbindung (6;7;17;18) der Streben (4;5;13;14) eingeleiteten Kräfte über die Dehnung und Stauchung innerhalb der Strebenanordnung (4;5;13;14) auslöschen.

10. Kraftfahrzeug (1) nach einem der Ansprüche 1 bis 9,
**dadurch gekennzeichnet,**
**daß** Streben (4,5;13,14) an dem Verbindungsträger (12) über Schraubverbindungen festlegbar sind

## Claims

1. A motor vehicle (1), in particular a cabriolet vehicle, with a vehicle body, to the underbody area (2) of which there are allocated at least two bracing struts (4, 5) which each run from a car body fixing (6, 7) with a component in the direction of a vertical longitudinal midplane (3), wherein there is provided, freely under the underbody (2) and spaced apart from it, a connection bearer (12) at which these struts (4, 5) are held at a close spacing (8) in respect of the vehicle transverse direction and two further struts (13,14) which each extend from there with a component in the direction going away from the vertical longitudinal midplane (3), **characterised in that** the connection bearer (12) is bent around at least one axis (24), extending transversely to the vehicle (1), between the fittings for two struts (4, 5) and the fittings for two further struts (13, 14).

2. The motor vehicle (1) according to claim 1,
**characterised in that**
the spacing (8) of the fittings of the struts (3; 4) at the connection bearer (12) is less than 120 millimetres in the vehicle transverse direction.

3. The motor vehicle (1) according to one of claims 1 or 2,
**characterised in that**
the further struts (13, 14) held at the connection bearer (12) are each fixed at the other end to a vehicle transverse bearer (20), to the spare wheel moulding or to vehicle longitudinal beams.

4. The motor vehicle (1) according to one of claims 1 to 3,
**characterised in that**
the connection bearer (12) is arranged in front of a rear axle (25) in the direction of travel (F).

5. The motor vehicle (1) according to one of claims 1 to 4,
**characterised in that**
all struts (4, 5; 13, 14) held at the connection bearer (12) are guided in the direction of travel (F) in front of the rear axle (25) to their car body fixing (6, 7; 17,18).

6. The motor vehicle (1) according to one of claims 1 to 5,
**characterised in that**
there are arranged, behind one another at the connection bearer, two pairs of struts (4, 5; 13,14), which, at least in projection onto a plane bent in accordance with the bend (24) of the connection bearer (12), have an almost x-shaped overall shape.

7. The motor vehicle (1) according to claim 6,
**characterised in that**
the struts (4, 5; 13,14) of each pair of struts are, in the vehicle transverse direction, respectively held close to one another (8; 19) at the connection bearer (12).

8. The motor vehicle (1) according to one of claims 6 or 7,
**characterised in that**
the rear pair (13, 14) of the two pairs of struts (4, 5; 13, 14) is fixed to a transverse bearer (20) of the car body via connection flanges (21, 22) which surround it, at least in sections, to the front and to the rear.

9. The motor vehicle (1) according to one of claims 1 to 8,
**characterised in that**
the connection bearer (12) is exclusively held at the underbody (2) by means of bracing struts (4, 5; 13, 14) and the forces introduced into a car body fixing (6; 7; 17; 18) of the struts (4; 5; 13; 14) are eliminated by means of the stretching and compression within the strut arrangement (4; 5; 13; 14).

10. The motor vehicle (1) according to one of claims 1 to 9,
**characterised in that**
struts (4, 5; 13,14) can be fixed onto the connection bearer (12) by means of screw connections.

## Revendications

1. Véhicule automobile (1), en particulier cabriolet, comprenant une carrosserie de véhicule dont la zone du dessous de caisse (2) présente au moins deux barres de renforcement (4, 5) devant s'étendre chacune à partir d'une liaison avec la carrosserie (6, 7) avec une composante en direction d'un plan médian longitudinal (3) vertical, étant précisé qu'il est prévu, librement sous le dessous de caisse (2) et à distance de ce dernier, un support de liaison (12) contre lequel sont maintenues ces barres (4, 5) à une distance (8) proche en référence à la direction transversale du véhicule ainsi que deux autres barres (13, 14) qui s'en éloignent chacune avec une composante en direction du plan médian longitudinal (3) vertical,
**caractérisé en ce que** le support de liaison (12) est coudé autour d'au moins un axe (24) s'étendant transversalement par rapport au véhicule (1), entre les supports pour deux barres (4, 5) et les supports pour deux autres barres (13,14).

2. Véhicule automobile (1) selon la revendication 1, **caractérisé en ce que** la distance (8) entre les supports des barres (3 ; 4) sur le support de liaison (12) dans la direction transversale du véhicule est inférieure à 120 millimètres.

3. Véhicule automobile (1) selon l'une des revendications 1 ou 2, **caractérisé en ce que** les autres barres (13, 14) maintenues sur le support de liaison (12) sont fixées à leur autre extrémité respectivement sur un support transversal de véhicule (20), sur l'auge de roue de secours ou sur les longerons de véhicule.

4. Véhicule automobile (1) selon l'une des revendications 1 à 3, **caractérisé en ce que** le support de liaison (12) est disposé en amont d'un essieu arrière (25) dans le sens de la marche (F).

5. Véhicule automobile (1) selon l'une des revendications 1 à 4, **caractérisé en ce que** toutes les barres (4, 5 ; 13, 14) maintenues sur le support de liaison (12) sont guidées vers leur liaison avec la carrosserie (6, 7 ; 17, 18) en amont de l'essieu arrière (25) dans le sens de la marche (F).

6. Véhicule automobile (1) selon l'une des revendications 1 à 5, **caractérisé en ce que** deux paires de barres (4, 5 ; 13, 14) ayant une structure globale pratiquement en forme de x, au moins dans la projection sur un plan coudé selon le coudage (24) du support de liaison (12), sont disposées l'une derrière l'autre sur le support de liaison.

7. Véhicule automobile (1) selon la revendication 6, **caractérisé en ce que** les barres (4, 5 ; 13, 14) de chaque paire de barres sont respectivement maintenues sur le support de liaison (12) à une distance proche l'une de l'autre (8 ; 19).

8. Véhicule automobile (1) selon l'une des revendications 6 ou 7, **caractérisé en ce que** la paire arrière (13, 14) des deux paires de barres (4, 5 ; 13,14) est fixée sur un support transversal (20) de la carrosserie par l'intermédiaire de brides de raccordement (21, 22) enserrant ledit support, au moins par zone, sur le devant et sur l'arrière.

9. Véhicule automobile (1) selon l'une des revendications 1 à 8, **caractérisé en ce que** le support de liaison (12) est maintenu sur le dessous de caisse (2) uniquement par l'intermédiaire des barres de renforcement (4, 5 ; 13,14) et **en ce que** les forces introduites dans une liaison avec la carrosserie (6 ; 7 ; 17; 18) des barres (4, 5 ; 13,14) sont anéanties par l'extension et la compression à l'intérieur de l'agencement de barres (4, 5 ; 13, 14).

10. Véhicule automobile (1) selon l'une des revendications 1 à 9, **caractérisé en ce que** les barre s (4, 5 ; 13,14) peuvent être fixées sur le support de liaison (12) par des assemblages à vis.
